# EUROPÄISCHE PATENTSCHRIFT

(11) **EP 0 766 813 B1**
(45) Veröffentlichungstag und Bekanntmachung des Hinweises auf die Patenterteilung: **22.12.1999**
(21) Anmeldenummer: 95921712.6
(22) Anmeldetag: 20.06.1995
(51) Int. Cl.: G01L 19/00, G01F 23/14, G01F 1/36, G21C 17/035

(54) **KONDENSGEFÄSS ZUR DAMPFDRUCKMESSUNG, VERWENDUNG DES KONDENSGEFÄSSES FÜR EINE FÜLLSTANDSMESSUNG UND EINE DAMPFDURCHSATZMESSUNG SOWIE VERFAHREN ZUM BETRIEB EINES KONDENSGEFÄSSES**
CONDENSATION VESSEL FOR STEAM PRESSURE MEASUREMENTS, USE OF THIS CONDENSATION VESSEL FOR LEVEL AND STEAM FLOW RATE MEASUREMENTS, AND PROCESS FOR OPERATING A CONDENSATION VESSEL
CUVE DE CONDENSATION SERVANT A MESURER LA PRESSION DE VAPEUR, UTILISATION DE CETTE CUVE DE CONDENSATION POUR EFFECTUER DES MESURES DU NIVEAU DE REMPLISSAGE ET DU DEBIT DE VAPEUR, ET PROCEDE D'EXPLOITATION D'UNE CUVE DE CONDENSATION

(30) Priorität: 21.06.1994 DE 4421273
(43) Veröffentlichungstag der Anmeldung: 09.04.1997
(73) Patentinhaber: SIEMENS AKTIENGESELLSCHAFT, 80333 München (DE)
(72) Erfinder: MESETH, Johann, D-64807 Dieburg (DE)
(86) Internationale Anmeldenummer: DE9500797
(87) Internationale Veröffentlichungsnummer: WO9535488

(56) Entgegenhaltungen:
- EP-A- 0 226 806
- EP-A- 0 334 235

## Beschreibung

Die Erfindung betrifft ein Kondensgefäß zur Dampfdruckmessung sowie zur Füllstandsmessung eines Reaktor-Druckbehälters und eine Verwendung des Kondensgefäßes zur Durchflußmessung von Frischdampf einer Kernkraftanlage.

In der DE-OS 23 06 211 ist eine Probenahmeeinrichtung für radioaktive oder aggressive flüssige und dampfförmige Medien beschrieben. Die Probenahmeeinrichtung hat eine Hauptleitung, von der eine Zapfleitung abzweigt und zu einer Probenahmetafel geführt ist. An der Probenahmetafel ist eine Zapfstelle sowie mindestens ein Meßgerät vorgesehen, wobei eine Rücklaufleitung von der Probenahmetafel zum Kondensator vorgesehen ist. Zwischen Zapf- und Rücklaufleitung ist mindestens eine nach beiden Leitungen hin mit Schnellverschlußkupplungen zum Anschließen eines Probenahmebehalters oder eines Meßgerätes versehene Zapfstrecke vorgesehen, die durch eine Bypassleitung überbrückt ist. Mit der Probenahmeeinrichtung wird der Zweck verfolgt, aus einem geschlossenen System Proben zu entnehmen, um die Sicherheit vor Auslaufen von radioaktivem Wasser zu erhöhen.

Die DE 39 38 341 C1 betrifft eine Wärmebehandlungseinrichtung, um ein bei einer verhältnismäßig niedrigen Temperatur, beispielsweise von weniger als 100 °C, zu behandelndes Erzeugnis mittels druckvermindertem Dampf und/oder Wasser als Wärmemedium sicher und wirkungsvoll einer Wärmebehandlung zu unterziehen. Die Einrichtung soll dabei eine verbesserte Wärmebehandlung mit druckkvermindertem Dampf gewährleisten, wobei ein gleichmäßiger Dampfdruck in der Wärmetauscherkammer und eine hohe thermische Wirksamkeit gegeben ist. Eine Verwendung der Einrichtung wird in der chemischen Industrie sowie der Nahrungsmittelindustrie gesehen.

Ein Kondensgefäß, welches zeitlich konstant bis zu einer vorgegebenen Höhe mit Kondensat befüllt ist, wird beispielsweise zur Bestimmung des Füllstandes eines Siedewasserreaktor-Druckbehälters verwendet. Dabei geben der in dem Kondensgefäß herrschende Dampfdruck sowie der hydrostatische Druck, welcher über die weitgehend konstante Menge des Kondensats erzeugt wird, in Kombination mit dem Dampfdruck im Inneren des Druckbehälters Auskunft über die Füllstandshöhe in dem Druckbehälter. Das Kondensgefäß steht ständig mit dem Druckbehälter in Verbindung, so daß außer Dampf unter Umständen Radiolysegas sowie andere nicht kondensierbare Gase, insbesondere Stickstoff, dem Kondensgefäß zugeführt werden. Diese Gase führen zu einer Absenkung des Partialdruckes des Dampfes und damit zu einer Veränderung der thermodynamischen Verhältnisse in dem Kondensgefäß. Die Gase werden außerdem in dem Kondensat gelöst, wodurch ein gasgesättigtes Kondensat entsteht. Die in dem Kondensat gelösten Gase können bei einer Absenkung des Dampfdruckes durch Austritt aus dem Kondensat zu einer Verringerung des Kondensatvolumens und damit zu einer Fehlmessung des Füllstandes führen.

Auch bei der Messung eines Dampfdurchsatzes mittels eines Venturi-Rohres, bei dem zur Bestimmung erforderlicher Drücke jeweils ein Kondensgefäß verwendet wird, besteht ebenfalls bei einer Ansammlung größerer Mengen eines nichtkondensierbaren Gases in dem Kondensgefäß die Möglichkeit einer Druck-Fehlmessung.

Fehlmessungen bei der Bestimmung des Füllstandes eines Siedewasserreaktor-Druckbehälters sind bei US-amerikanischen Siedewasserreaktoren bekannt geworden. Zur Vermeidung einer solchen Fehlmessung sind bisher zusätzliche aktiv betriebene Systeme installiert worden, die eine kontinuierliche, kontrollierte Zuspeisung von Kondensat, welches frei von gelöstem nichtkondensierbarem Gas ist, bewirken. Hierdurch wird das Kondensat effektiv abgereichert an nichtkondensierbaren Gasen, und es wird ein Diffusionsprozeß in Gang gesetzt, bei dem nichtkondensierbare Gase aus dem Dampfbereich in das Kondensat eindringen, wodurch die Konzentration der nichtkondensierbaren Gase im Dampfraum verringert wird. Neben einem erhöhten gerätetechnischen Aufwand und einer entsprechenden Kontrolle des Systems, muß bei einem solchen System immer dafür gesorgt werden, daß ausreichend gasfreies Kondensat vorhanden ist.

Ein Kondensgefäß zur Dampfdruckmessung ist auch aus der EP-A-0 226 806 bekannt. Aufgabe der Erfindung ist es, ein Kondensgefäß anzugeben, bei dem durch besser wirkende Mittel eine Ansammlung von nichtkondensierbarem Gas sicher vermieden wird. Weitere Aufgaben der Erfindung sind die Angabe einer Verwendung des Kondensgefäßes sowie ein Verfahren zum Betrieb des Kondensgefäßes.

Die Lösung der auf ein Kondensgefäß gerichteten Aufgabe erfolgt erfindungsgemäß über ein Kondensgefäß zur Dampfdruckmessung mit einem Dampfbereich, einer Dampfleitung, welche an einer Einmündung in den Dampfbereich mündet, einem Kondensatbereich, welcher sich unmittelbar geodätisch unterhalb der Einmündung an den Dampfbereich anschließt und einer Abzugseinrichtung, die mit dem Dampfbereich verbunden ist und einem Abzug von Dampf und nichtkondensierbaren Gasen aus dem Kondensgefäß dient.

Erfindungsgemäß ist gewährleistet, daß ein nichtkondensierbares Gas, welches über die Dampfleitung in den Dampfbereich eingeführt wird, über die Abzugseinrichtung aus dem Kondensgefäß wieder herausgeführt wird. Durch diese separat wirkende Abfuhr ist gewährleistet, daß eine Ansammlung von nichtkondensierbarem Gas in dem Kondensgefäß vermieden ist. Insbesondere ist dadurch verhindert, daß sich ein nennenswerter Anteil von nichtkondensierbarem Gas in dem Kondensatbereich löst und dadurch eventuell zu einer Fehlmessung des Dampfdruckes führt. Eine separate Abfuhr von nichtkondensierbarem Gas durch eine Abzugseinrichtung ist vorteilhaft, da über die Dampfleitung ein nichtkondensierbares Gas, welches leichter als der Dampf ist, zum überwiegenden Teil nicht aus dem Kondensgefäß abführbar ist. Dies gilt sowohl für eine horizontal als auch eine zu der Einmündung des Kondensatgefäßes hin steigend verlaufende Dampfleitung. Dies insbesondere deshalb, weil zwar Kondensat als dünner Kondensatfilm entlang der Dampfleitung das Kondensgefäß wieder verläßt, aber dieses zurückströmende Kondensat so gut wie kein gelöstes Gas enthält. Denn eventuell im Kondensatfilm gelöstes, nichtkondensiertes Gas gast aus und wird mit dem Dampf fast ausschließlich in Richtung des Kondensgefäßes geführt. Ein Rücktransport von nicht kondensierbarem Gas aus dem Kondensgefäß heraus ist sowohl über einen Transport in Dampf als auch in Kondensat nahezu ausgeschlossen. Beispielsweise ist eine Mischung aus Wasserdampf und Radiolysegas, insbesondere wegen eines Anteils an Wasserstoff, spezifisch leichter als reiner Wasserdampf. Das spezifische Gewicht der Mischung sinkt bei steigender Temperatur und nimmt bei ca. 200 °C ein Minimum an. Eine Zunahme der Konzentration von Radiolysegas führt dazu, daß eine solche Mischung aufsteigt und somit eine Lösung in dem Kondensatfilm weitgehend ausgeschlossen ist. Durch die separate Ableitung des nichtkondensierbaren Gases kann auf passive Art und Weise erreicht werden, daß eine Ansammlung von nichtkondensierbarem Gas in dem Kondensgefäß wirksam vermieden wird. Somit wird auch in dem Kondensatbereich nahezu kein Gas gelöst, wodurch auch bei einer größeren Druckabsenkung eine Freisetzung von Gasblasen weitgehend ausgeschlossen ist. Eine fehlerhafte Füllstandsmessung ist damit wirksam verhindert. Die Abzugseinrichtung kann auch aktiv betrieben werden, indem beispielsweise eine Pumpe vorgesehen ist, die über eine Pumpleitung Dampf und nichtkondensierbare Gase oder zusätzliches Kondensat, in welchem nichtkondensierbare Gase gelost sind, aus dem Kondensgefäß absaugt.

Bevorzugtermaßen ist die Abzugseinrichtung mit dem geodätisch oberen Ende des Dampfbereiches verbunden. Dies hat den Vorteil, daß ein nichtkondensierbares Gas, beispielsweise gegenüber dem Dampf spezifisch leichteres Radiolysegas, welches überwiegend in dem oberen Ende des Dampfbereiches aufsteigt, und sich dort ansammeln konnte, direkt von dieser Ansammlungsstelle aus dem Kondensgefäß herausführbar ist. Dadurch ist von vornherein eine Ansammlung einer größeren Menge von nichtkondensierbarem Gas in dem Kondensgefäß unterbunden.

Bevorzugt hat das Kondensgefäß eine Trennwand, durch die der Dampfbereich in einen ersten Dampfteilbereich und einen zweiten Dampfteilbereich aufgeteilt ist. Die Aufteilung erfolgt dabei so, daß Dampf des ersten Dampfteilbereiches in den Kondensatbereich kondensiert und Dampf des zweiten Dampfteilbereiches in die Abzugseinrichtung gelangt, insbesondere dort kondensiert. Durch eine solche Aufteilung des Dampfbereiches kann das Kondensgefäß besonders kompakt ausgeführt werden und weitere Leitungen, mit denen das nichtkondensierbare Gas aus dem Kondensgefäß herausgeführt wird, können entfallen. Ein solches Kondensgefäß eignet sich auch besonders dazu, vorhandene Kondensgefäße bei gleichem Platzbedarf zu ersetzen.

Bevorzugtermaßen sind etwa 20 - 50 % des aus dem Dampfbereich anfallenden Kondensats über die Abzugseinrichtung kondensierbar, insbesondere in einem Zusatzkondensatbereich. Damit ist auch bei ungünstigen Bedingungen, insbesondere bei einer Zuführung einer großen Menge an nichtkondensierbarem Gas gewährleistet, daß dieses weitgehend vollständig wieder aus dem Kondensgefäß entfernt wird.

Bevorzugtermaßen weist die Abzugseinrichtung eine U-Leitung, insbesondere einen Siphon, auf. Bei Inbetriebnahme des Kondensgefäßes füllt sich diese U-Leitung mit zusätzlichem Kondensat, so daß ein in dem Dampfbereich vorhandener Dampf nicht direkt in die Kondensatableitung gelangt. Hierdurch ist erreicht, daß nichtkondensierbares Gas ausschließlich in gelöster Form über die Kondensatableitung transportiert wird. Die U-Leitung, eine Kühlstrecke sowie ein Zusatzkondensatbereich können sowohl außerhalb eines Gehäuses, in welchem der Kondensatbereich und der Dampfbereich liegen, angeordnet sein, als auch, beispielsweise zum Schutz eines solchen Gehäuses vor mechanischen Beschädigungen, um dieses herum gewickelt oder in diesem Gehäuse integriert sein. Das Gehäuse kann seine längste Ausdehnung in vertikaler Richtung (stehende Ausführung) oder in horizontaler Richtung (liegende Ausführung) besitzen.

Vorzugsweise hat die Abzugseinrichtung einen Zusatzkondensatbereich, in welchem Dampf aus dem Dampfbereich als ein zusätzliches Kondensat (Zusatzkondensat) kondensiert. Dieses Zusatzkondensat, welches räumlich von dem Kondensat des Kondensatbereichs getrennt ist, kann einen erhöhten Anteil an nichtkondensierbarem Gas enthalten. Dieses nichtkondensierbare Gas kann mit dem Zusatzkondensat separat in ein Dampfgefäß zurückgeführt werden. Bei einer separaten Rückführung des Zusatzkondensats ist ein Ausgasen von gelöstem nichtkondensierbarem Gas weitgehend ausgeschlossen. Dieses wird daher zusammen mit dem Zusatzkondensat aus dem Kondensgefäß sicher herausgeführt. Der zu der Abzugseinrichtung zählende Zusatzkondensatbereich kann sowohl innerhalb als auch außerhalb des Kondensgefäßes angeordnet sein. Der Zusatzkondensatbereich weist eine Kondensatableitung auf, mit der das Zusatzkondensat in das Dampfgefäß zurückgeführt oder in ein separates Entwässerungssystem geleitet wird. Auf jedem Fall wird dadurch ein nichtkondensierbares Gas aus dem Kondensgefäß herausgeleitet und eine Ansammlung größerer Mengen nichtkondensierbarer Gase in dem Kondensgefäß wirksam unterbunden.

Der Zusatzkondensatbereich hat vorzugsweise eine Kühlstrecke, in der eine Kondensation begünstigt wird. In dem in der Kühlstrecke anfallenden zusätzlichen Kondensat, dem Zusatzkondensat, kann ein nichtkondensierbares Gas in starkem Maße gelost und aus dem Kondensgefäß über die Kondensatableitung wirksam entfernt werden.

Die Kühlstrecke beginnt daher mit Vorteil an dem geodätisch oberen Ende des Dampfbereiches, in welches ein nichtkondensierbares Gas aufsteigt.

Je nach örtlicher Gegebenheit und zu verwendender Geometrie des Kondensgefäßes kann es vorteilhaft sein, die U-Leitung sowohl außerhalb des Kondensatbereiches als auch außerhalb des Dampfbereiches anzuordnen. Zum Zwecke einer schnelleren Kondensatbildung in dem Zusatzkondensatbereich kann zumindest ein Teil des Zusatzkondensatbereiches in dem Kondensatbereich und/oder in dem Dampfbereich des Kondensgefäßes liegen. Ein Verlauf des Zusatzkondensatbereiches innerhalb des Kondensgefäßes ist ggf. auch aus Platzersparnisgründen oder zum Schutz vor mechanischer Beschädigung vorteilhaft.

Vorzugsweise ist die Kondensatableitung überwiegend innerhalb der Dampfleitung geführt, wodurch weder zusätzlicher Platz beansprucht wird noch eine zusätzliche Eintrittsöffnung für die Kondensatableitung in ein entsprechendes Kondensataufnahmesystem notwendig ist. Dieses Kondensataufnahmesystem kann dabei ein Dampfgefäß, beispielsweise ein Reaktordruckbehälter einer Kernkraftanlage, oder eine dampf führende Leitung sein, mit der die Dampfleitung verbunden ist.

Vorzugsweise ist das Kondensgefäß an einem Reaktor-Druckbehälter einer Kernkraftanlage, insbesondere einem Siedewasserreaktor, angeordnet, wobei die Dampfleitung in den Reaktor-Druckbehälter an einer Druckbehältermündung einmündet und die Abzugseinrichtung, insbesondere mit einer Kondensatableitung, in den Reaktor-Druckbehälter zurückführt. Auf diese Weise wird ein in dem Reaktor-Druckbehälter entstehendes nichtkondensierbares Gas, insbesondere Radiolysegas mit Wasserstoff und/oder Sauerstoff, direkt wieder in den Reaktor-Druckbehälter zurückgeführt, ohne eine Beeinflussung der Dampfdruckmessung innerhalb des Kondensgefäßes hervorzurufen. Ebenso kann das Kondensgefäß an einer dampf führenden Leitung der Kernkraftanlage angeordnet sein und die Kondensatableitung in diese dampf führende Leitung zurückführen. Außerdem kann das Kondensgefäß mit einem Druckhalter eines Druckwasserreaktors verbunden sein.

Bevorzugt ragt die Kondensatableitung der Abzugseinrichtung in den Reaktor-Druckbehälter hinein und hat innerhalb des Reaktor-Druckbehälters einen Siphon. Der tiefste Punkt des Siphon liegt mit weiterem Vorzug geodätisch unterhalb einer Druckbehältermündung, durch welche die Kondensatableitung in den Reaktor-Druckbehälter eingeführt ist.

Eine U-Leitung der Abzugseinrichtung hat vorzugsweise einen geodätisch tiefsten Punkt, der geodätisch tiefer als die Druckbehältermündung liegt. Dies verringert die Möglichkeit einer Entleerung der U-Leitung von einem in der Abzugseinrichtung anfallenden Zusatzkondensat.

Die Abzugseinrichtung, insbesondere eine Kondensatableitung, kann darüber hinaus in ein Entwässerungssystem einer Kernkraftanlage führen.

Bevorzugtermaßen wird das Kondensgefäß zur Bestimmung der Füllstandshöhe von Kühlwasser eines Reaktor-Druckbehälters, insbesondere eines Siedewasserreaktors, verwendet. Da mit dem Kondensgefäß gewährleistet ist, daß der Kondensatbereich ständig bis zu der vorgegebenen Höhe mit Kondensat gefüllt ist, ist eine Fehlbestimmung der Füllstandshöhe, insbesondere aufgrund von aus dem Kondensat ausgasenden nichtkondensierbaren Gasen, weitgehend ausgeschlossen.

Das Kondensgefäß läßt sich ebenfalls für eine Durchflußmessung von Frischdampf in einer Frischdampf-Leitung einer Kernkraftanlage, insbesondere eines Siedewasserreaktors, verwenden. Dabei kann das Kondensgefäß beispielsweise zur Dampfdruckmessung in einem Venturi-Rohr verwendet werden, ohne daß die Gefahr einer Fehlmessung aufgrund freigesetzter in dem Kondensat gelöster nichtkondensierbarer Gase besteht. Da ebenfalls eine Ansammlung von Gasen, insbesondere chemisch reaktiven Gasen, innerhalb des Kondensgefäßes vermieden ist, kann die Druckmessung mit sensiblen Druckaufnehmern erfolgen. Eine Verwendung von Druckaufnehmern mit einem hohen zulässigen statischen Druck, beispielsweise von etwa 250 bar oder mehr, aber mit einer geringen Meßempfindlichkeit, ist nicht erforderlich, da eine chemische Gasreaktion in dem Kondensgefäß, die zu großen Druckspitzen führen könnte, nahezu ausgeschlossen ist. Mit dem Kondensgefäß ist somit auch eine zuverlässige und genaue Durchflußmessung gewährleistet.

Die auf ein Verfahren gerichtete Aufgabe wird durch ein Verfahren gelöst, bei dem zum Betrieb eines Kondensgefäßes mit einem Dampfbereich, einer Dampfleitung, welche an einer Einmündung in den Dampfbereich mündet, einem Kondensatbereich, welcher sich unmittelbar geodätisch unterhalb der Einmündung an den Dampfbereich anschließt, Dampf und nichtkondensierbare Gase aus dem Dampfbereich abgezogen werden. Der Dampf wird bevorzugt in einem oberen Ende des Kondensgefäßes abgezogen, da dort nichtkondensierbare Gase mit geringer spezifischer Dichte aufsteigen. Diese werden hierdurch besonders wirksam aus dem Kondensgefäß entfernt, so daß eine Fehlmessungen infolge von in dem Kondensatbereich gelösten nichtkondensierbaren Gasen weitgehend ausgeschlossen werden kann. Der Dampf kann dabei passiv, insbesondere über einen Zusatzkondensatbereich, oder aktiv, beispielsweise über eine Pumpe, aus dem Kondensgefäß abgezogen werden.

Anhand der Zeichnung wird das Kondensgefäß näher erläutert. Es zeigen in schematischer Darstellung:
- FIG 1: Eine erste Ausführungsform des Kondensgefäßes in einem Längsschnitt,
- FIG 2: eine zweite Ausführungsform,
- FIG 3: eine dritte Ausführungsform,
- FIG 4: eine vierte Ausführungsform,
- FIG 5: eine fünfte Ausführungsform.

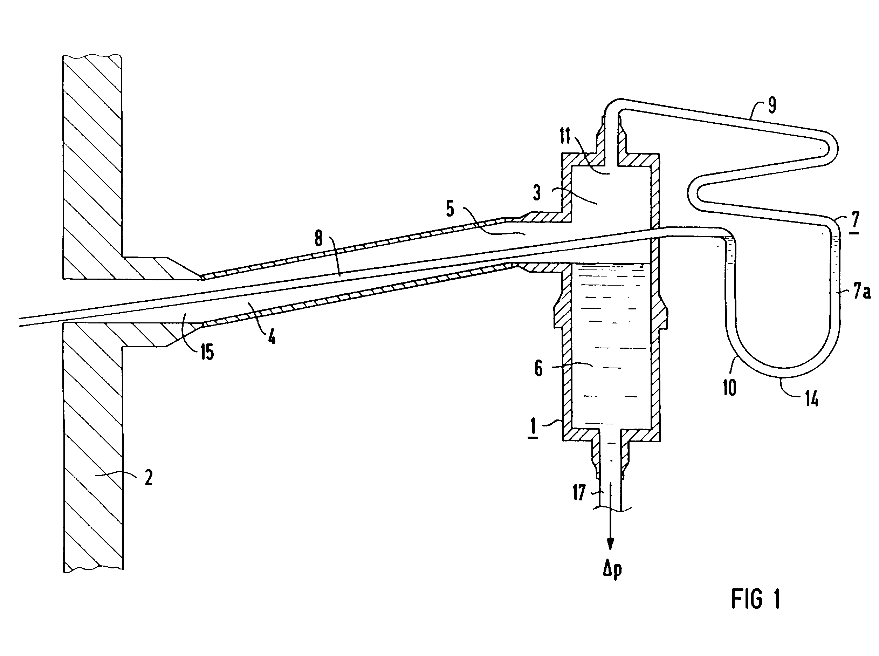

In den Figuren sind jeweils nur die zur Erläuterung wesentlichen Komponenten dargestellt. Gemäß FIG 1 ist ein Kondensgefäß 1 über eine Dampfleitung 4 mit einem Reaktor-Druckbehälter 2 verbunden. Ohne Einschränkung des Nachfolgenden kann das Kondensgefäßes 1 auch mit einer dampf führenden Leitung, insbesondere einer Frischdampf-Leitung eines Siedewasserreaktors oder mit einem Druckhalter eines Druckwasserreaktors verbunden sein. Die Dampfleitung 4 mündet an einer Druckbehältermündung 15 in den Reaktor-Druckbehälter 2. Mit dem Kondensgefäß 1 ist die Dampfleitung 4 über eine Einmündung 5 verbunden. Die Dampfleitung 4 verläuft von der Druckbehältermündung 15 zu der Einmündung 5 des Kondensgefäßes 1 steigend. Innerhalb des Kondensgefäßes 1 schließt sich geodätisch unterhalb der Einmündung 5 unmittelbar ein Kondensatbereich 6 an. Der Kondensatbereich 6 ist bis zur Höhe der Einmündung 5 ständig mit Kondensat gefüllt. Neu anfallendes Kondensat fließt somit unmittelbar über die Dampfleitung 4 zurück in den Reaktor-Druckbehälter 2. Geodätisch oberhalb des Kondensatbereiches 6 schließt sich ein Dampfbereich 3 an. In diesen Dampfbereich 3 strömt über die Dampfleitung 4 von dem Reaktor-Druckbehälter 2 ständig Dampf nach. Der Druck innerhalb des Dampfbereiches 3 entspricht weitgehend dem Druck innerhalb des Reaktor-Druckbehälters 2. Über eine Differenzdruck-Meßleitung 17, welche sich geodätisch unterhalb des Kondensatbereiches 6 an diesen anschließt, ist der Dampfbereich 3 mit einem hier nicht dargestellten der Füllstandsmessung dienenden Differenzdruck-Aufnehmer verbunden. Am geodätisch oberen Ende 11 des Dampfbereiches 3 beginnt eine Abzugseinrichtung 7 mit einem Zusatzkondensatbereich 7a. Unmittelbar an das obere Ende 11 schließt sich eine Kühlstrecke 9 an, an die sich eine U-Leitung 10, ein Siphon, anschließt, der in eine Kondensatableitung 8 übergeht. Die Kondensatableitung 8 durchdringt das Kondensgefäß 1 oberhalb des Kondensatbereiches 6 und verläuft in der Dampfleitung 4 von der Einmündung 5 des Kondensgefäßes bis in den Reaktor-Druckbehälter 2 hinein. Die U-Leitung 10 ist soweit mit Zusatzkondensat gefüllt, daß ständig ein Teil dieses Zusatzkondensats über die Kondensatableitung 8 in den Reaktor-Druckbehälter 2 zurückströmt. Das in der U-Leitung 10 gesammelte Zusatzkondensat enthält in gelöster Form ein nichtkondensierbares Gas, welches mit Dampf aus dem Reaktor-Druckbehälter 2 über die Dampfleitung 4 in das Kondensgefäß 1 gelangt ist. Dieses Gas steigt aufgrund seiner geringen Dichte in das geodätisch obere Ende 11 des Dampfbereiches 3 auf, von wo es mit kondensierendem Dampf in die U-Leitung 10 gelangt. Das nichtkondensierbare Gas wird somit auf passive Art und Weise unmittelbar nach seinem Eintritt in das Kondensgefäß 1 über den Zusatzkondensatbereich 7a aus dem Kondensgefäß 1 wieder herausgeführt und in gelöster Form in den Reaktor-Druckbehälter 2 zurückgespeist. Darüber hinaus wird das in gelöster Form zurückgespeiste nichtkondensierbare Gas an der Druckbehältermündung 15 nicht erneut mit Dampf in das Kondensgefäß 1 eingespeist. Auch dadurch kann eine Ansammlung von nichtkondensierbarem Gas in dem Kondensgefäß 1 zusätzlich vermindert werden. Das in dem Kondensatbereich 6 vorhandene Kondensat weist aufgrund der unmittelbaren Gasabfuhr allenfalls einen unwesentlichen Anteil von gelöstem, nichtkondensierbarem Gas auf. Dadurch kann eine Fehlmessung des Füllstandes des Reaktor-Druckbehälters 2 aufgrund einer Freisetzung von Gas und einer damit verbundenen Verdrängung des Kondensats in der Differenzdruck-Meßleitung 17 sicher vermieden werden. Aufgrund der Verlegung der Kondensatableitung 8 im Inneren der Dampfleitung 4 ist weder eine zusätzliche Durchführung in den Reaktor-Druckbehälter 2 hinein erforderlich noch besteht ein zusätzlicher Platzbedarf, so daß eine Nachrüstung bestehender Kondensgefäße 1 besonders einfach ist.

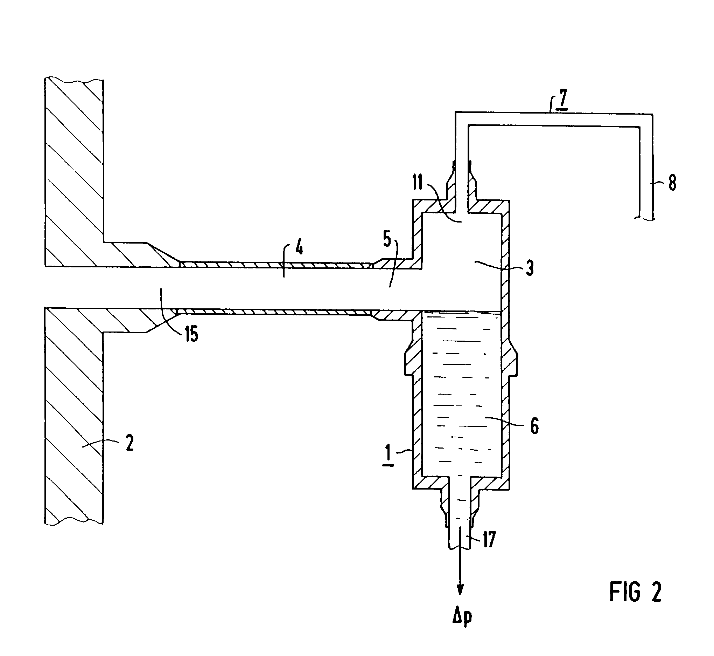

In FIG 2 ist eine zweite Ausführungsform eines Kondensgefäßes 1 dargestellt. Die Bezugszeichen entsprechen dabei denen der FIG 1. Die Dampfleitung 4 verläuft hierbei zwischen der Einmündung 5 des Kondensgefäßes 1 und der Druckbehältermündung 15 der Dampfleitung 4 in den Reaktor-Druckbehälter 2 waagrecht, wodurch ebenfalls gewährleistet ist, daß in dem Dampfraum 3 anfallendes zusätzliches Kondensat (Zusatzkondensat) über die Dampfleitung 4 in den Reaktor-Druckbehälter 2 zurückläuft. Die Höhe des Kondensats in dem Kondensatbereich 6 wird dadurch ständig konstant gehalten. Die Kondensatableitung 8 führt zu einem hier nicht dargestellten Entwässerungssystem der Kernkraftanlage, in welchem ein in dem Zusatzkondensat gelöste nichtkondensierbare Gas einfach entfernbar ist. Dadurch wird der Anteil an nichtkondensierbarem Gas, insbesondere Radiolysegas, innerhalb des Kondensgefäßes 1 wirksam reduziert.

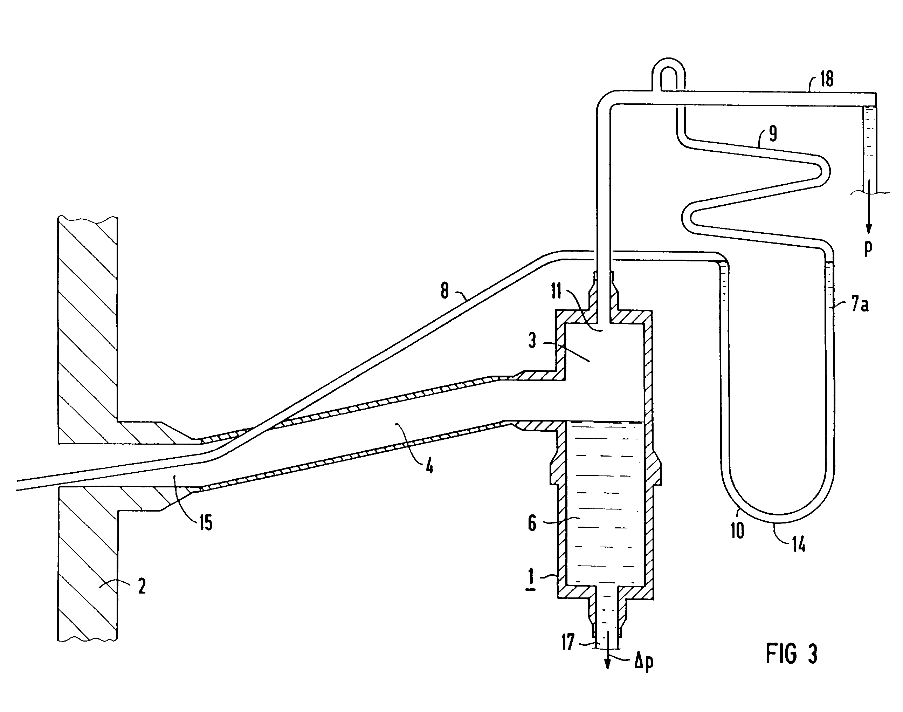

Bei der in FIG 3 dargestellten dritten Ausführungsform eines Kondensgefäßes 1 ist ein Zusatzkondensatbereich 7a über eine Absolutdruck-Meßleitung 18 mit dem Dampfbereich 3 verbunden, wobei der mit Dampf gefüllte Teil der Absolutdruck-Meßleitung 18 zu dem Dampfbereich 3 gerechnet wird. Der gesamte Zusatzkondensatbereich 7a mit Kühlstrecke 9, U-Leitung 10 und Kondensatableitung 8 liegt hierbei außerhalb des Kondensgefäßes 1. Die Kondensatableitung 8 mündet in der Umgebung der Druckbehältermündung 15 in die Dampfleitung 4 ein. Bei dieser dritten Ausführungsform ist somit weder eine zusätzliche Durchführung in das Kondensgefäß 1 noch in den Reaktor-Druckbehälter 2 erforderlich. Dadurch ist eine Nachrüstung eines bereits vorhandenen Kondensgefäßes 1 besonders einfach möglich.

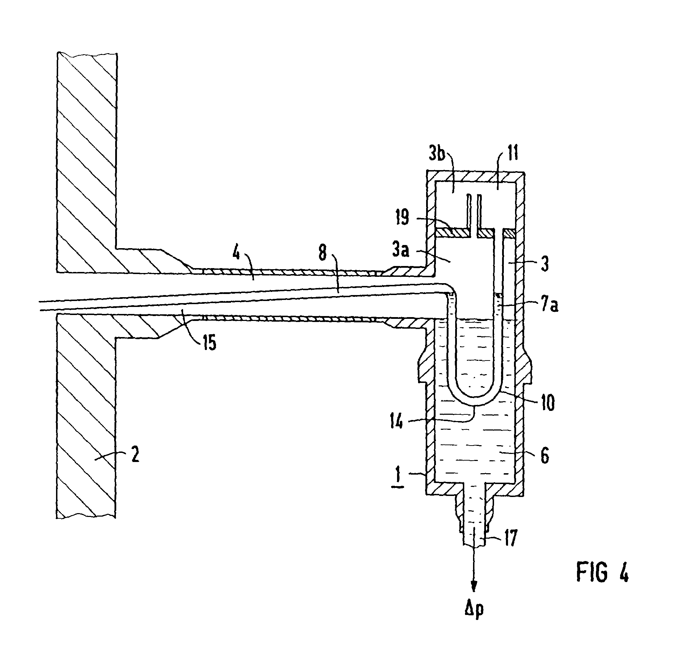

In FIG 4 ist ein Kondensgefäß 1 mit einem Zusatzkondensatbereich 7a, einer U-Leitung 10 und einer Kondensatableitung 8 dargestellt. Der Dampfbereich 3 ist durch eine Trennwand 19 in einen ersten Dampfteilbereich 3a und einen zweiten Dampfteilbereich 3b aufgeteilt. Die Trennwand 19 ist waagrecht angeordnet und für einen Durchtritt von Dampf aus dem ersten Dampfteilbereich 3a in den zweiten Dampfteilbereich 3b geöffnet. Die Trennwand 19, insbesondere ein Trennblech, kann sowohl gewölbt als auch eben sein und schräg, konisch oder senkrecht angeordnet werden. Mit der Trennwand 19 ist die U-Leitung 10 verbunden, welche vollständig im Inneren des Kondensgefäßes 1 angeordnet und zum zweiten Dampfteilbereich 3b geöffnet ist. Der geodätisch tiefste Punkt 14 der U-Leitung 10 liegt im Kondensatbereich 6 und ist tiefer angeordnet als die Druckbehältermündung 15. Dadurch ist sowohl eine zusätzliche Kühlung in dem Zusatzkondensatbereich 7a erreicht, sowie die Möglichkeit einer Entleerung der U-Leitung 10 verringert. Darüber hinaus ist weder eine zusätzliche Durchführung durch das Kondensgefäß 1, die Dampfleitung 4 noch den Reaktor-Druckbehälter 2 erforderlich.

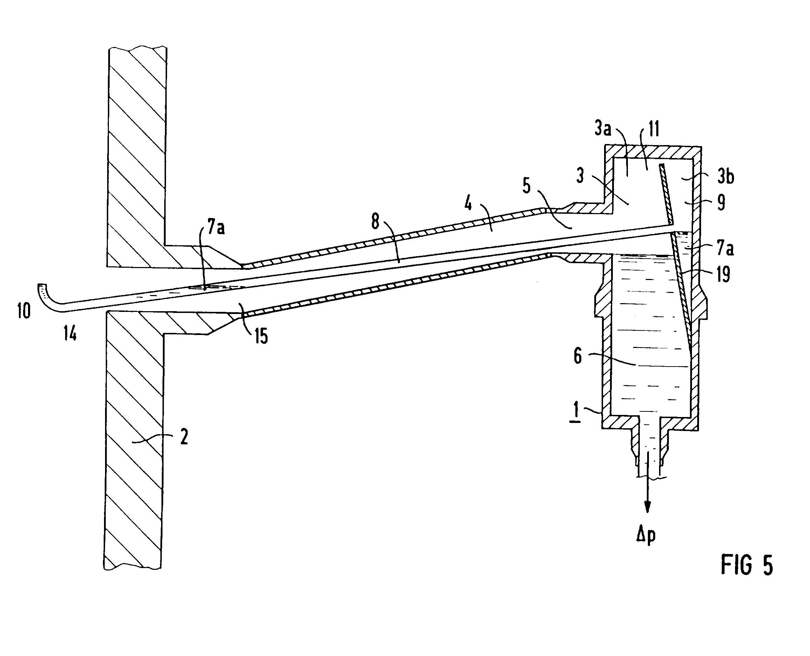

FIG 5 zeigt in einem Längsschnitt eine fünfte Ausführungsform eines Kondensgefäßes 1, welches analog zu FIG 1 über eine steigende Dampfleitung 4 mit einem Reaktor-Druckbehälter 2 verbunden ist. Die Bezugszeichen stimmen mit denen von FIG 1 überein. Der Dampfraum 3 des Kondensgefäßes 1 ist durch eine schrägstehende Trennwand 19 in einen ersten Dampfteilbereich 3a und einen zweiten Dampfteilbereich 3b aufgeteilt. Der erste Dampfteilbereich 3a ist der Dampfleitung 4 zugewandt und mit dieser über eine Einmündung 5 des Kondensgefäßes 1 zum Austausch von Dampf verbunden. Der zweite Dampfteilbereich 3b ist der Dampfleitung 4 abgewandt und an dem geodätisch oberen Ende 11 des Dampfbereiches 3 zu dem ersten Dampfteilbereich 3a geöffnet. Durch die Dampfleitung 4 ist eine Kondensatableitung 8 geführt, welche einerseits durch die Trennplatte 19 hindurch in den zweiten Dampfteilbereich 3b sowie andererseits in den Reaktor-Druckbehälter 2 mündet. Der zweite Dampfteilbereich 3b dient gleichzeitig als Kühlstrecke 9 zur Kondensation eines Zusatzkondensats, welches direkt unterhalb des zweiten Dampfteilbereiches 3b in einem Zusatzkondensatbereich 7a auskondensiert. Der Pegel des Zusatzkondensats innerhalb des Zusatzkondensatbereichs 7a liegt so hoch, daß Zusatzkondensat in die Kondensatableitung 8 fließen und durch diese hindurch in den Reaktor-Druckbehälter 2 gelangen kann. Die Kondensatableitung 8 hat im Inneren des Reaktor-Druckbehälters 2 eine U-Leitung 10, einen Siphon, mit einem tiefsten Punkt 14, welcher ebenfalls innerhalb des Reaktor-Druckbehälters 2 liegt. Durch die U-Leitung 10 ist ein weiterer Zusatzkondensatbereich 7a gebildet, in den das Zusatzkondensat aus dem Kondensgefäß 1 in die Kondensatableitung 8 gelangt. Der geodätisch tiefste Punkt 14 der U-Leitung 10 liegt in etwa auf der Höhe der Druckbehältermündung 15.

Das erfindungsgemäße Kondensgefäß mit einer Abzugseinrichtung, insbesondere mit einem Zusatzkondensatbereich und einer Kondensatableitung, zeichnet sich dadurch aus, daß es passiv wirkend eine Ansammlung von einem nichtkondensierbaren Gas innerhalb des Kondensgefäßes verhindert. Dadurch ist ebenfalls die Menge an gelöstem nichtkondensierbarem Gas in dem Kondensat, welches für die Dampfdruckmessung innerhalb des Kondensgefäßes vorgesehen ist, so gering gehalten, daß eine Fehlmessung infolge einer Freisetzung größerer Mengen an Gas ausgeschlossen ist. Das Kondensgefäß eignet sich somit für die Füllstandsmessung eines Kernreaktor-Druckbehälters, insbesondere eines Siedewasserreaktors, sowie zur Dampfdurchsatzmessung in einer dampfführenden Leitung, insbesondere einer Frischdampf-Leitung eines Siedewasserreaktors, mittels eines Venturi-Rohres.

## Patentansprüche

1. Kondensgefäß (1) zur Dampfdruckmessung mit einem Dampfbereich (3), einer Dampfleitung (4), welche an einer Einmündung (5) in den Dampfbereich (3) mündet, einem Kondensatbereich (6), welcher sich unmittelbar geodätisch unterhalb der Einmündung (5) an den Dampfbereich (3) anschließt, und einer Abzugseinrichtung (7), die mit dem Dampfbereich (3) verbunden ist und einem Abzug von Dampf und nichtkondensierbaren Gasen aus dem Kondensgefäß (1) dient.

2. Kondensgefäß (1) nach Anspruch 1, bei dem die Abzugseinrichtung (7) mit dem geodätisch oberen Ende (11) des Dampfbereiches (3) verbunden ist.

3. Kondensgefäß (1) nach einem der vorhergehenden Ansprüche, bei dem der Dampfbereich (3) in einen ersten Dampfteilbereich (3a) und einen zweiten Dampfteilbereich (3b) mittels einer Trennwand (19) aufgeteilt ist, wobei Dampf des ersten Dampfteilbereichs (3a) in den Kondensatbereich (6) kondensiert und Dampf des zweiten Dampfteilbereichs (3b) in die Abzugseinrichtung (7) gelangt, insbesondere dort kondensiert.

4. Kondensgefäß (1) nach einem der vorhergehenden Ansprüche, bei dem über die Abzugseinrichtung (7) etwa 20% bis 50% des aus dem Dampfbereich (3) anfallenden Kondensats kondensierbar sind.

5. Kondensgefäß (1) nach einem der vorhergehenden Ansprüche, bei dem die Abzugseinrichtung (7) eine U-Leitung (10), insbesondere einen Siphon, hat.

6. Kondensgefäß (1) nach Anspruch 5, bei dem die U-Leitung (10) außerhalb des Kondensatbereichs (6) und außerhalb des Dampfbereichs (3) liegt.

7. Kondensgefäß (1) nach einem der vorhergehenden Ansprüche, dessen Abzugseinrichtung (7) einen Zusatzkondensatbereich (7a) mit einer Kondensatableitung (8) aufweist.

8. Kondensgefäß (1) nach Anspruch 7, bei dem der Zusatzkondensatbereich (7a) eine Kühlstrecke (9) hat.

9. Kondensgefäß (1) nach Anspruch 8, bei dem die Kühlstrecke (9) in dem geodätisch oberen Ende (11) des Dampfbereichs (3) beginnt.

10. Kondensgefäß (1) nach einem der Ansprüche 7 bis 9, bei dem der Zusatzkondensatbereich (7a) zumindest teilweise in dem Dampfbereich (3) und/oder dem Kondensatbereich (6) liegt.

11. Kondensgefäß (1) nach einem der Ansprüche 7 bis 10, bei dem die Kondensatableitung (8) überwiegend innerhalb der Dampfleitung (4) geführt ist.

12. Kondensgefäß (1) nach einem der vorhergehenden Ansprüche an einem Reaktor-Druckbehälter (2) einer Kernkraftanlage, bei dem die Dampfleitung (4) in den Reaktor-Druckbehälter (2) an einer Druckbehältermündung (15) einmündet und die Abzugseinrichtung (7), insbesondere mit einer Kondensatableitung (8), in den Reaktor-Druckbehälter (2) zurückführt.

13. Kondensgefäß (1) nach Anspruch 12, bei dem die Abzugseinrichtung (7) eine U-Leitung (10) aufweist, die einen geodätisch tiefsten Punkt (14) hat, der geodätisch tiefer als die Druckbehältermündung (15) liegt.

14. Kondensgefäß (1) nach Anspruch 12 oder 13, bei dem die Abzugseinrichtung (7) eine Kondensatableitung (8) hat, die in den Reaktor-Druckbehälter (2) hineinragt und innerhalb des Reaktor-Druckbehälters (2) eine U-Leitung (10), insbesondere einen Siphon, hat.

15. Kondensgefäß (1) nach einem der Ansprüche 1 bis 11 an einem Reaktor-Druckbehälter (2) einer Kernkraftanlage, bei dem die Dampfleitung (4) in den Reaktor-Druckbehälter (2) an einer Druckbehältermündung (15) einmündet und die Abzugseinrichtung (7), insbesondere mit einer Kondensatableitung (8), in ein Entwässerungssystem (13) der Kernkraftanlage führt.

16. Verwendung eines Kondensgefäßes (1) nach einem der vorhergehenden Ansprüche zur Bestimmung der Füllstandshöhe von Kühlwasser eines Reaktor-Druckbehälters (2).

17. Verwendung eines Kondensgefäßes (1) nach einem der Ansprüche 1 bis 9 zur Durchflußmessung von Frischdampf in einer Frischdampf-Leitung einer Kernkraftanlage.

18. Verfahren zum Betrieb eines Kondensgefäßes (1) zur Dampfdruckmessung mit einem Dampfbereich (3), einer Dampfleitung (4), welche an einer Einmündung (5) in den Dampfbereich (3) mündet, einem Kondensatbereich (6), welcher sich unmittelbar geodätisch unterhalb der Einmündung (5) an den Dampfbereich (3) anschließt, wobei Dampf und nichtkondensierbare Gase aus dem Dampfbereich (3) abgezogen werden.

## Claims

1. Condensation vessel (1) for steam-pressure measurement, having a steam zone (3), a steam line (4), which opens out into the steam zone (3) at a mouth (5), a condensate zone (6), which is connected directly to the steam zone (3) geodetically below the mouth (5), and a discharge device (7), which is connected to the steam zone (3) and is used for a discharge of steam and non-condensable gases from the condensation vessel (1).

2. Condensation vessel (1) according to claim 1, in which the discharge device (7) is connected to the geodetically upper end (11) of the steam zone (3).

3. Condensation vessel (1) according to one of the preceding claims, in which the steam zone (3) is divided into a first partial steam zone (3a) and a second partial steam zone (3b) by means of a partition (19), with steam of the first partial steam zone (3a) condensing in the condensate zone (6) and steam of the second partial steam zone (3b) passing into the discharge device (7), in particular condensing there.

4. Condensation vessel (1) according to one of the preceding claims, in which approximately 20% to 50% of the condensate arising from the steam zone (3) can be condensed by way of the discharge device (7).

5. Condensation vessel (1) according to one of the preceding claims, in which the discharge device (7) has a U-line (10), in particular a siphon.

6. Condensation vessel (1) according to claim 5, in which the U-line (10) lies outside the condensate zone (6) and outside the steam zone (3).

7. Condensation vessel (1) according to one of the preceding claims, the discharge device (7) of which has an additional condensate zone (7a) having a condensate discharge line (8).

8. Condensation vessel (1) according to claim 7, in which the additional condensate zone (7a) has a cooling section (9).

9. Condensation vessel (1) according to claim 8, in which the cooling section (9) starts in the geodetically upper end (11) of the steam zone (3).

10. Condensation vessel (1) according to one of claims 7 to 9, in which the additional condensate zone (7a) lies at least partially in the steam zone (3) and/or the condensate zone (6).

11. Condensation vessel (1) according to one of claims 7 to 10, in which the condensate discharge line (8) is led predominantly within the steam line (4).

12. Condensation vessel (1) according to one of the preceding claims on a reactor pressure vessel (2) of a nuclear power station, in which the steam line (4) opens out into the reactor pressure vessel (2) at a pressure-vessel opening (15) and the discharge device (7), in particular with a condensate discharge line (8), leads back into the reactor pressure vessel (2).

13. Condensation vessel (1) according to claim 12, in which the discharge device (7) has a U-line (10), which has a geodetically lowest point (14) which is geodetically lower than the pressure-vessel opening (15).

14. Condensation vessel (1) according to claim 12 or 13, in which the discharge device (7) has a condensate discharge line (8) which projects into the reactor pressure vessel (2) and, inside the reactor pressure vessel (2), has a U-line (10), in particular a siphon.

15. Condensation vessel (1) according to one of claims 1 to 11 on a reactor pressure vessel (2) of a nuclear power station, in which the steam line (4) opens out into the reactor pressure vessel (2) at a pressure-vessel opening (15) and the discharge device (7), in particular with a condensate discharge line (8), leads into a drainage system (13) of the nuclear power station.

16. Use of a condensation vessel (1) according to one of the preceding claims for determining the level of cooling water in a reactor pressure vessel (2).

17. Use of a condensation vessel (1) according to one of claims 1 to 9 for flow-rate measurement of live steam in a live-steam line of a nuclear power station.

18. Method for operating a condensation vessel (1) for steam-pressure measurement, having a steam zone (3), a steam line (4), which opens out into the steam zone (3) at a mouth (5), a condensate zone (6), which is connected directly to the steam zone (3) geodetically below the mouth (5), with steam and non-condensable gases being drawn off from the steam zone (3).

## Revendications

1. Cuve (1) de condensation servant à mesurer la pression de vapeur, comprenant une zone (3) pour de la vapeur, un conduit (4) pour de la vapeur qui débouche en une embouchure (5) dans la zone (3) pour la vapeur, une zone (6) pour du produit condensé qui se raccorde directement d'un point de vue géodésique en-dessous de l'embouchure (5) de la zone (3) pour de la vapeur et un dispositif (7) d'évacuation qui communique avec la zone (3) pour de la vapeur et qui sert à évacuer de la vapeur et des gaz non condensables de la cuve (1) de condensation.

2. Cuve (1) de condensation suivant la revendication 1, dans laquelle le dispositif (7) d'évacuation communique avec l'extrémité (11) géodésiquement supérieure de la zone (3) pour de la vapeur.

3. Cuve (1) de condensation suivant l'une des revendications précédentes, dans laquelle la zone (3) pour de la vapeur est subdivisée en une première sous-zone (3) pour de la vapeur et en une seconde sous-zone (3b) pour de la vapeur au moyen d'une cloison (19), de la vapeur de la première sous-zone (3) pour de la vapeur étant condensée dans la zone (6) pour du produit condensé, et de la vapeur de la seconde sous-zone (3b) pour de la vapeur parvenant dans le dispositif d'évacuation en y étant notamment condensée.

4. Cuve (1) de condensation suivant l'une des revendications précédentes, dans laquelle environ 20 % à 50 % du produit condensé se formant dans la zone (3) pour de la vapeur peut être condensé par l'intermédiaire du dispositif (7) d'évacuation.

5. Cuve (1) de condensation suivant l'une des revendications précédentes, dans laquelle le dispositif (7) d'évacuation a un conduit (10) en U. notamment un siphon.

6. Cuve (1) de condensation suivant la revendication 5, dans laquelle le conduit (10) en U est à l'extérieur de la zone (6) pour le produit condensé et à l'extérieur de la zone (3) pour de la vapeur.

7. Cuve (1) de condensation suivant l'une des revendications précédentes, dont le dispositif (7) d'évacuation comporte une zone (7a) supplémentaire pour le produit condensé ayant un conduit (8) d'évacuation du produit condensé.

8. Cuve (1) de condensation suivant la revendication 7, dans laquelle la zone (7a) supplémentaire pour le produit condensé a une région (9) de refroidissement.

9. Cuve (1) de condensation suivant la revendication 8, dans laquelle la région (9) de refroidissement commence à l'extrémité (11) géodésiquement supérieure de la zone (3) pour de la vapeur.

10. Cuve (1) de condensation suivant l'une des revendications 7 à 9, dans laquelle la zone (7a) supplémentaire pour le produit condensé se trouve au moins en partie dans la zone (3) pour de la vapeur et/ou dans la zone (6) pour le produit condensé.

11. Cuve (1) de condensation suivant l'une des revendications 7 à 10, dans laquelle le conduit (8) d'évacuation du produit condensé passe d'une manière prépondérante dans le conduit (4) pour de la vapeur.

12. Cuve (1) de condensation suivant l'une des revendications précédentes sur une cuve (2) sous pression de réacteur d'une centrale nucléaire, dans laquelle le conduit (4) pour de la vapeur débouche dans la cuve (2) sous pression du réacteur en une embouchure (15) de la cuve sous pression et le dispositif (7) d'évacuation revient notamment par un conduit (8) d'évacuation du produit condensé à la cuve (2) sous pression du réacteur.

13. Cuve (1) de condensation suivant la revendication 12, dans laquelle le dispositif (7) d'évacuation comporte un conduit (10) en U qui a un point (14) géodésiquement le plus bas qui est géodésiquement plus bas que l'embouchure (15) de la cuve sous pression.

14. Cuve (1) de condensation suivant la revendication 12 ou 13, dans laquelle le dispositif (7) d'évacuation a un conduit (8) d'évacuation du produit condensé qui pénètre dans la cuve (2) sous pression du réacteur et qui a à l'intérieur de la cuve (2) sous pression de réacteur un conduit (10) en U, notamment un siphon.

15. Cuve (1) de condensation suivant l'une des revendications 1 à 11, sur une cuve (2) sous pression de réacteur d'une centrale nucléaire dans laquelle le conduit (4) pour de la vapeur débouche dans la cuve (2) sous pression du réacteur en une embouchure (15) de la cuve sous pression et le dispositif (7) d'évacuation mène, notamment par un conduit (8) d'évacuation du produit condensé, à un système (13) d'enlèvement de l'eau de la centrale nucléaire.

16. Utilisation d'une cuve (1) de condensation suivant l'une des revendications précédentes, pour déterminer le niveau de remplissage de l'eau de refroidissement d'une cuve (2) sous pression de réacteur.

17. Utilisation d'une cuve (1) de condensation suivant l'une des revendications 1 à 9 pour la mesure du débit de la vapeur fraîche dans un conduit de vapeur fraîche d'une centrale nucléaire.

18. Procédé pour faire fonctionner une cuve (1) de condensation en vue de mesurer la pression de vapeur comprenant une zone (3) pour de la vapeur, un conduit (4) pour de la vapeur qui débouche en une embouchure (5) dans la zone (3) pour de la vapeur, une zone (6) pour du produit condensé qui se raccorde immédiatement d'un point de vue géodésique en dessous de l'embouchure (5) à la zone (3) pour de la vapeur, de la vapeur et des gaz non condensables étant évacués de la zone (3) pour de la vapeur.
